# EUROPEAN PATENT APPLICATION

(11) **EP 1 742 020 A2**
(43) Date of publication of application: **10.01.2007**
(21) Application number: 06253572.9
(22) Date of filing: 07.07.2006
(51) Int. Cl.: G01C 21/36

(54) **Image display device and image display method**

(30) Priority: 08.07.2005 JP 2005199912
(71) Applicant: Nissan Motor Company Limited, Kanagawa-ku Yokohama-shi, Kanagawa 221-0023 (JP)
(72) Inventor: Amari, Takeyuki, c/o Nissan Motor Co., Ltd., Yokohama-shi, Kanagawa, 221-0023 (JP); Hara, Kengo, c/o Nissan Motor Co., Ltd., Yokohama-shi, Kanagawa, 221-0023 (JP); Saitoh, Tatsuki, c/o Nissan Motor Co., Ltd., Yokohama-shi, Kanagawa, 221-0023 (JP)
(74) Representative: Holmes, Matthew William

(57) **Abstract**

An image display device and an image display method are provided that can be adopted easily by the user. The image display device has a processor and display for displaying a picture. The processor classifies items as first items that can be operated in the stopped state of the vehicle and second items that can be operated in both the stopped state and running state of the vehicle, and displays the items on the display based on the operating state of the vehicle.

## Description

The present invention pertains to an image display device carried in an automobile or other vehicle, and to an image display method.

An image display device as known is described in Japanese Kokai Patent Application No. 2003-214883. This reference describes a display device, which when operated in the running state only enables a limited menu to be used in the navigation picture. When stopped, all of the menus can be used in the navigation picture. Switching is performed between the running state and stopped state for the menus used in the navigation picture.

Embodiments of the invention provide an image display device and method. According to one image display device for a navigation system of a vehicle taught herein, the device includes a display unit having a screen for displaying a picture and a processor connected to the display unit. The processor is operable to classify display items as first display items that can be operated in only a stopped state of the vehicle and second display items that can be operated in both the stopped state and a running state of the vehicle. The processor is also operable to simultaneously display the first and second display items on the display unit.

In another example of an image display device for a navigation system of a vehicle, the device comprises image display means for displaying a picture, processing means, connected to the image display means, for displaying on the image display means display items operable in both a stopped state and a running state of the vehicle, and transitioning means for transitioning the display items to next display items operable in both the stopped state and the running state of the vehicle based on operation of one of the display items.

Image display methods for operating an image display device of a vehicle are also taught herein. One such method includes, by example, classifying items to be displayed on a screen of the image display device as first items that can be operated in a stopped state of the vehicle and second items that can be operated in both the stopped state and a running state of the vehicle and displaying an image including both the first items and the second items on the screen of the display device during the stopped state of the vehicle.

Another image display method for displaying images on a display screen of an image display device attached to a vehicle includes, for example, associating two or more operating functions of the image display device with a corresponding image icon that is displayable on the display screen, grouping the image icons into at least a first group and a second group, monitoring the speed of the vehicle, displaying the first group of image icons with a map on the display screen when the vehicle is at or above a selected speed and simultaneously displaying the first group of image icons and the second group of image icons on the display screen when the vehicle is below the selected speed.

Furthermore according to the present invention there is provided an image display device for a navigation system of a vehicle, comprising: a display unit having a screen for displaying a picture; and a processor connected to the display unit, the processor operable to classify display items as first display items that can be operated in only a stopped state of the vehicle and second display items that can be operated in both the stopped state and a running state of the vehicle, and the processor operable to simultaneously display the first and second display items on the display unit.

The processor may be further operable to display the second display items in a same display state and at a same location in both the stopped state of the vehicle and the running state of the vehicle.

The device may further comprise a touch input device for operating the second display items through contact with the screen of the display unit.

The device may further comprise a remote control input device for operating the second display items, the remote control input device remote from the display unit.

The remote control input device may be attached to a steering wheel of the vehicle and the remote control input device being operable in two directions; and the processor may be further operable to select one of the second display items for operation based on operation of the remote control input device.

The processor may be further operable to transition from a simultaneous display of the first and second display items to a simultaneous display the first display items and additional display items operable in both the stopped state and the running state of the vehicle when one of the second display items is operated.

The processor may be further operable to display the additional display items in a same relative location with respect to the first display items as the second display items with respect to the first display items.

Furthermore, according to the present invention there is provided an image display device for a navigation system of a vehicle, comprising: image display means for displaying a picture; processing means, connected to the image display means, for displaying on the image display means display items operable in both a stopped state and a running state of the vehicle; and transitioning means for transitioning the display items to next display items operable in both the stopped state and the running state of the vehicle based on operation of one of the display items.

The processing means may further comprise means for displaying the display items in a same screen location on the image display means in both the stopped state and the running state of the vehicle.

The processing means may further comprise means for displaying the next display items in the same screen location as the display items in both the stopped state and the running state of the vehicle.

The processing means may further comprise means for displaying the next display items in the same screen location as the display items in both the stopped state and the running state of the vehicle.

The device may further comprise touch input means for receiving input to operate the display items through contact with the image display means.

The device may further comprise input means, remote from the image display means, for receiving input to operate the display items. The input means may be attached to a steering wheel of the vehicle and the input means may be operable in two directions, image display device further comprising: means for selecting one of the display items for operation based on operation of the input means.

The processing means may further comprise means for simultaneously displaying second display items with the display items, the second display items operable in only one of the stopped state and the running state of the vehicle.

Furthermore, according to the present invention there is provided a method for operating an image display device of a vehicle, the method comprising: classifying items to be displayed on a screen of the image display device as first items that can be operated in a stopped state of the vehicle and second items that can be operated in both the stopped state and a running state of the vehicle; and displaying an image including both the first items and the second items on the screen of the display device during the stopped state of the vehicle.

Furthermore, according to the present invention there is provided an image display method for displaying images on a display screen of an image display device attached to a vehicle, comprising: associating two or more operating functions of the image display device with a corresponding image icon that is displayable on the display screen; grouping the image icons into at least a first group and a second group; monitoring the speed of the vehicle; displaying the first group of image icons with a map on the display screen when the vehicle is at or above a selected speed; and simultaneously displaying the first group of image icons and the second group of image icons on the display screen when the vehicle is below the selected speed.

The method may further comprise displaying the first group of image icons in a same display state and at a same location when the vehicle is at or above a selected speed as when the vehicle is below the selected speed.

The method may further comprise triggering operation of an operating function associated with an image icon through manipulation of an input device remote from the display screen.

The method may further comprise transitioning from display including the first group of image icons to a third group of image icons when one of the first group of image icons is manipulated; and displaying the third group of image icons in a same relative position as the first group of image icons.

Within the scope of this application it is envisaged that the various aspects, embodiments and alternatives set out in the preceding paragraphs, in the claims and in the following description may be taken individually or in any combination thereof.

The description herein makes reference to the accompanying drawings, wherein like reference numerals refer to like parts throughout the several views, and wherein:
Figure 1 is a diagram illustrating one example of the image display device according to an embodiment of the invention;
Figures 2A-2B include a diagram (A) illustrating a stopped state picture; a diagram (B) illustrating a running state picture; a diagram (C) illustrating a third running state picture; and diagrams (D)-(G) illustrating the change in the picture when one of the operable items is operated;
Figure 3 is a flow chart illustrating switching in the image display according to Figure 1;
Figure 4 is a diagram illustrating a layout of the display and the steering wheel switch that can be used in both the running state and stopped state of the vehicle;
Figure 5 is a diagram illustrating the operation state of touch panel in the image display device according to Figure 1;
Figure 6 includes a diagram (A) illustrating the operation state of a steering wheel switch and a diagram (B) illustrating the picture; and
Figure 7 includes a diagram (A) illustrating the operation state of a steering wheel switch of the dial system and a diagram (B) illustrating the picture.

In the known device mentioned previously, when the menus are switched to those for the running state from the stopped state, the menu items for operation when the vehicle is stopped are switched to the menu items for when the vehicle is running. Consequently, the driver does not know which menu item is to be used. As a result, the driver may have to search the menu for menu items corresponding to the running state.

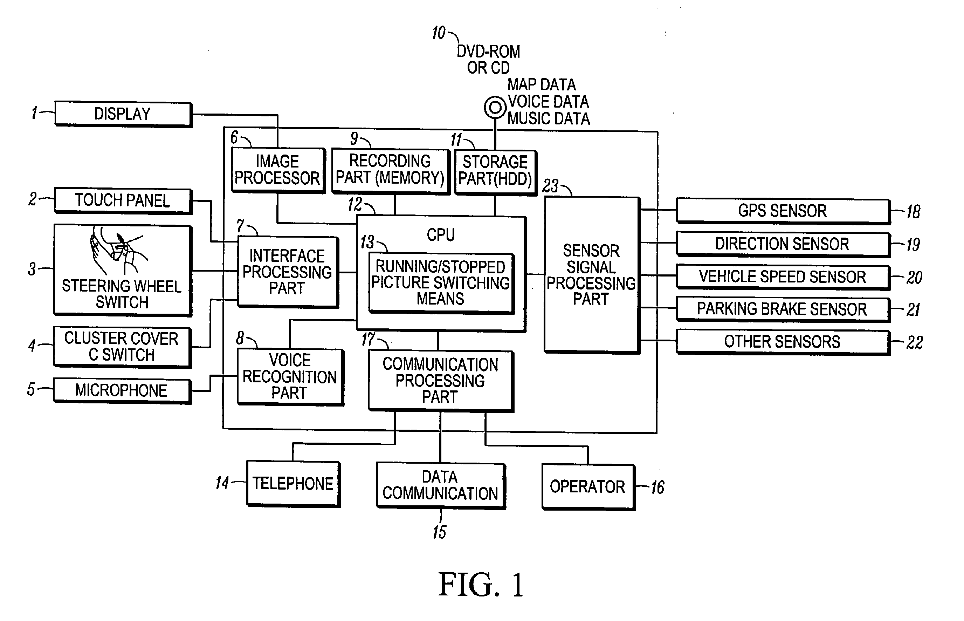

In contrast, embodiments of the invention provide a better interface for the driver. Accordingly, Figure 1 illustrates one example of an image display device, such as a vehicle onboard navigation device or the like, of the invention.

In Figure 1, shown are a liquid crystal display device or CRT or other display unit 1, a touch panel 2, a steering wheel switch 3, a cluster cover C switch 4, a microphone 5, a image processor 6, an interface processing part 7, a voice recognition part 8, a recording part (memory), a DVD-ROM or CD 10, a storage part (HDD) 11, a CPU (central processing unit) 12, a running state/stopped state picture switching means 13, a telephone 14, data communication 15, an operator 16, a communication processing part 17, a GPS (global positioning system) sensor 18, a direction sensor 19, a vehicle speed sensor 20, a parking brake (PKB) sensor 21, other types of sensors 22 and a sensor signal processing part 23. Each of these elements is discussed in further detail below.

More specifically, display 1 displays the current map for the running state of the vehicle, the current position and direction of the vehicle, the operation menu, etc.

Touch panel 2 comprises operation switches operated by touch input of the user, and they are integrated with display 1. Steering wheel switch 3 is a remote control switch set on the steering wheel. Cluster cover C switch 4 is a remote control operation switch set on cluster cover C. Microphone 5 can be used for input of a sentence, phrase or word pronounced by the user. Components 2-5 collectively represent operation means (input means).

Voice recognition part 8 recognizes the voice input from microphone 5. DVD-ROM or CD 10 records map data, voice data, music data, etc. Storage part 11 consists of a hard disk.

CPU 12 controls the overall device, and controls the running/stopped pictures as discussed in more detail hereinafter. Communication processing part 17 processes communication by telephone 14, data communication 15, operator 16, etc.

GPS sensor 18 operates based on electromagnetic waves from multiple satellites received with a GPS antenna, and it determines the position (latitude and longitude) of the vehicle. Direction sensor 19 detects the movement direction of the vehicle.

Vehicle speed sensor 20 detects the vehicle speed corresponding to the rotational velocity of the wheels of the vehicle. Parking brake sensor 21 detects the state of the parking brake. Various types of sensors 22 are also provided. These sensors 22 detect the running state of the vehicle, such as the reverse switch, light switch, etc.

Sensor signal processing part 23 detects the advancing direction of the vehicle based on the signal from direction sensor 19, computes the running distance from the vehicle speed signal from vehicle speed sensor 20 and detects the running state of the vehicle based on the signal from parking brake sensor 21 and various other sensors 22. In response to sensor inputs, the sensor signal processing part 23 generates signals needed for control.

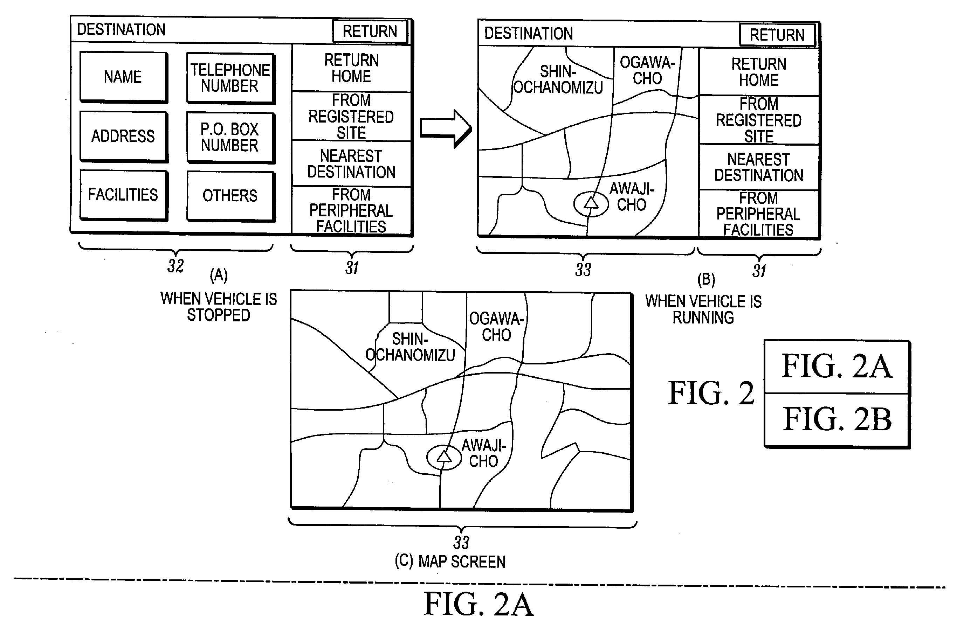

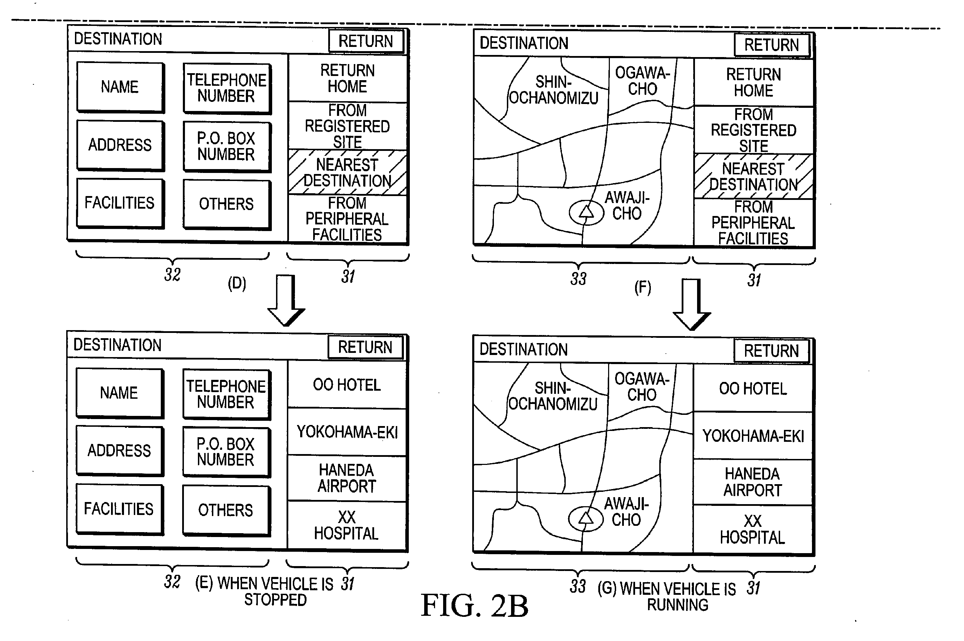

In diagram (A) of Figure 2, illustrated is a stopped state picture. In diagram (B), illustrated is the running state picture (operation). Diagram (C) illustrates the running state picture (map display over the entire screen).

In each of these representations, reference number 31 represents the operable items in the menu displayed in both the stopped state picture as shown in diagram (A) and in the running state picture as shown in diagram (B). Reference number 32 represents the operable items in the menu displayed only for the stopped state picture, while reference number 33 represents the map displayed in the running state.

As shown in diagrams (A) and (B), the operable items 31 displayed in both the stopped state picture and the running state picture appear in the stopped state picture with the same display form in the same position (as in the running state), that is, on the right side of the screen in this example. Also, the picture shown in diagram (B) is a picture that is displayed when the user calls up the menu during running. When the operation is not performed, as shown in diagram (C), map 33 is displayed on the entire screen so that a map covering a wide area can be viewed.

As shown in more detail in diagrams (A) and (B), operable items 31 (menu image) commonly displayed on the right side of the screen include, for example, the following four items: "return home", "from registered site", "nearest destination" and "from peripheral facilities". The operable items 31 are ones that can be operated even during running.

During running, when the user operates operable items 31 by means of steering wheel switch 3 as a remote control means, the screen is switched to images corresponding to the input from steering wheel switch 3, and the user can perform further menu operations.

The contents of the operation menu can also be operated during running. For example, in either the stopped state or running state when "nearest destination" in operable items 31 of diagram (D) of Figure 2 is selected, the menu transitions to the common items 31 shown in diagram (E) as the next selectable items.

On the left side of the stopped state picture shown as an example in diagram (A), operable items (menu) 32 that set the destination in detail, such as the six items of "name", "address", "facilities", "telephone number", "P. O. Box number" and "others", are displayed. The operable items 32 become operable in the stopped state.

In the stopped state, when operable items 31 and 32 are selected by the user using touch panel 2, the screen displays the corresponding image, and the user can perform further selection operations.

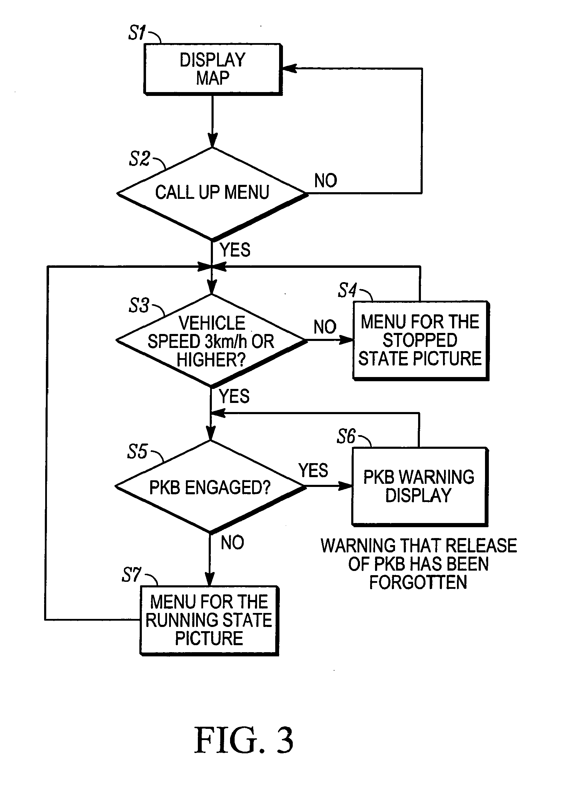

In the following, the process flow will be explained with reference to Figures 2 and 3 where Figure 3 is a flow chart illustrating image display switching. The process flow is performed by a programmable device, by example CPU 12 in Figure 1. Note that as shown, the CPU 12 is part of a specially-programmed microcontroller with various separately-identified processing parts and memory components (such as memory 9 and voice recognition part 8). Alternatively, of course, the processor could be any other type of programmable device with the various parts and components of Figure 1 incorporated therein or separately programmed and connected thereto.

First, in step S1 map 33 is displayed over the entire screen during running (operation) of the vehicle as shown by example in diagram (C) of Figure 2.

Then, in step S2 a judgment is made as to whether the user has used steering wheel switch 3 to call up the menu picture. If the response is NO, flow returns to step S1, and display of the map image shown in diagram (C) is continued. If the response is YES, the process advances to step S3.

In step S3 vehicle speed sensor 20 is used to judge whether the vehicle speed of the vehicle is higher than a level preset in the device, for example, 3 km/h. If the vehicle speed is not over 3 km/h, processing advances to step S4 where the stopped state picture is displayed as shown by example in diagram (A) of Figure 2. The user can use this picture to perform various operations and setups. Processing flow then returns to step S3.

When the speed is over 3 km/h in response to the query in step S3, processing advances to step S5. In this step, parking brake sensor 21 is used to detect the state of the parking brake. When the parking brake is locked, processing advances to step S6 where a warning reminding the driver to release the parking brake is generated by any appropriate means. Processing flow then returns to step S5.

When the parking brake has been released as indicated by the response to the query of step S5, processing advances to step S7. In step S7 a map 33 such as that shown in diagram (B) of Figure 2 and the running state picture with the menu 31 partially displayed to the right side of the map, is displayed. The user can use this menu 31 to execute various functions displayed using the menu 31. Processing flow returns to step S3.

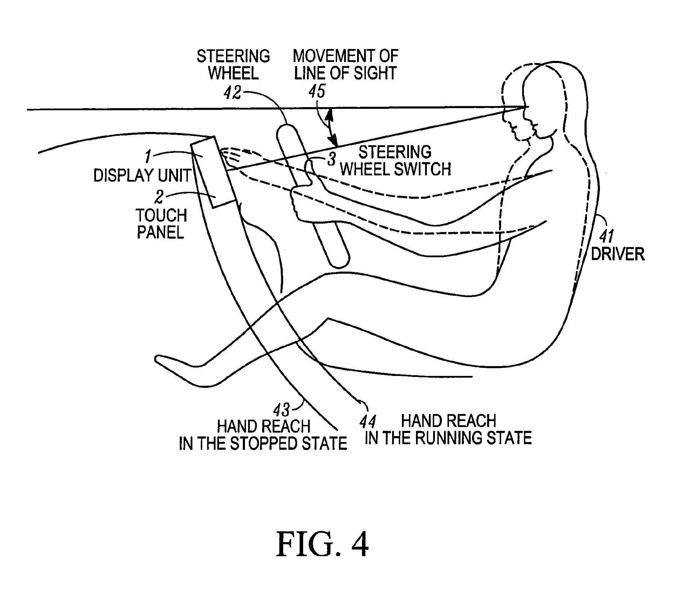

Figure 4 is a diagram illustrating the layout of display 1 and steering wheel switch 3, etc., that enables use during both the running state and stopped state of the vehicle. Shown in the figure are: the driver (or operator) 41; the steering wheel 42; the reach of the driver's hand in the stopped state 43; the hand reach in the running state 44 and the movement of the driver's line of sight 45.

Operation in the stopped state does not require that the driver 41 maintain hold of the steering wheel 42, and if the driver's shoulder is moved a little there is no effect on the driving operation of the vehicle. On the other hand, for selection operations in the running state, movement of the driver's shoulder may influence the driving operation since the driver has to hold steering wheel 42. Consequently, for the image display device taught herein, display 1 is placed high so that the driver can see it easily, touch panel 2 is added to the display 1, and steering wheel switch 3 for menu operation is arranged on a portion of steering wheel 42 that does not cause problems while driving.

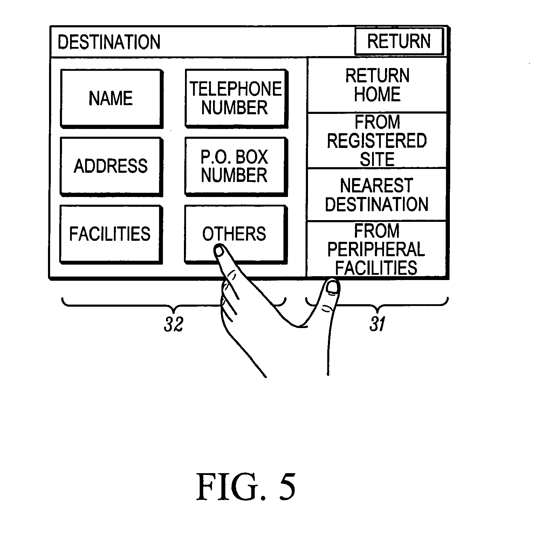

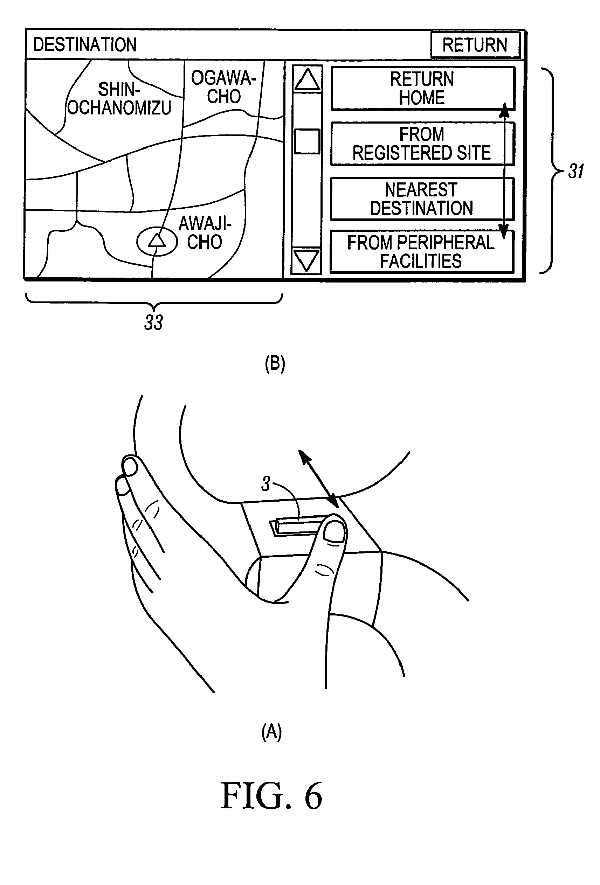

Figure 5 is a diagram illustrating operation of touch panel 2 by the driver in the image display device. Similarly, Figure 6 includes a diagram (A) illustrating operation of the steering wheel switch 3 by the driver, while diagram (B) illustrates movement of the selection on the menu 31 on the display 1 resulting from the driver's actions. More specifically, as indicated by the arrow in diagram (A), steering wheel switch 3 can be operated in two directions. In response, as indicated by the arrow in diagram (B), the operable items 31 are listed in the same direction as the direction of operation by the driver.

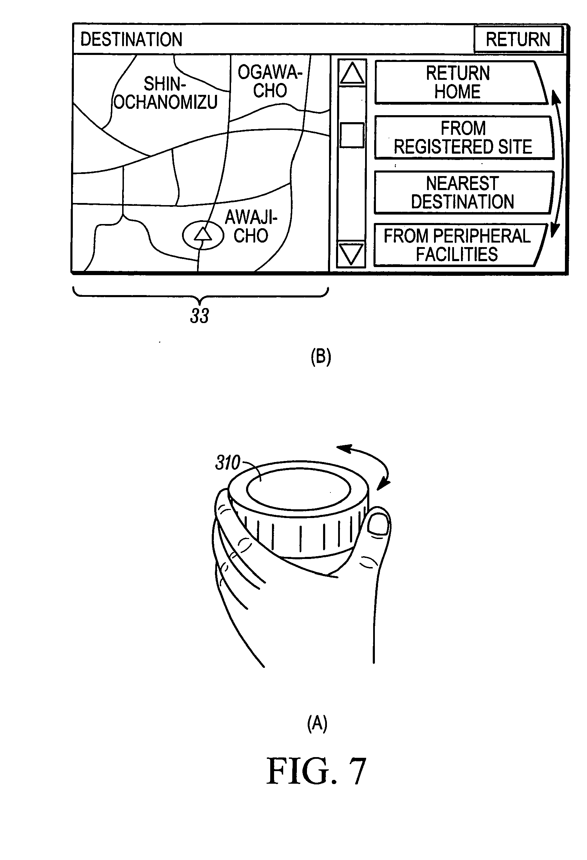

Figure 7 includes a diagram (A) illustrating operation of a steering wheel switch 310 by the driver using a dial system, while diagram (B) illustrates movement of the menu 31 on the display 1 resulting from the driver's actions. As indicated by the arrow in diagram (A), steering wheel switch 310 of the dial type can be operated by rotation in two directions. The operable items 31 are listed in the same direction as the direction of operation by the driver.

With respect to Figures 6 and 7, selection after the desired operation is highlighted is performed by pressing down steering wheel switch 3 or 310.

In the image display device there are the several pictures. The first is the menu for the steering wheel switch shown on the right side of diagram (B) of Figure 2 that corresponds to user input from steering wheel switch 3 shown in diagram (A) of Figure 6. Steering wheel switch 3 is set on steering wheel 42 (Figure 4). Shown with this menu can be menus for the touch panel as shown in diagram (A) of Figure 2 that correspond to direct user input from touch panel 2 (Figure 5).

The menu operated by the steering wheel switch, on the right side of the picture shown in diagram (B) of Figure 2 is always displayed. That is, the operable items 31 shared by the stopped state picture of diagram (A) and the running state picture of diagram (B) are always displayed.

In the stopped state the input picture for the touch panel is displayed on the portion (left side of the screen) not taken up by the menu for the steering wheel switch in the stopped state as shown in diagram (A) of Figure 2. On the other hand, map 33 is displayed in the portion of the touch panel input picture on the left side of the screen when the vehicle is running and the menu is called up by the user, as shown in diagram (B) of Figure 2.

In either display, input for the steering wheel switch menu on the right side of the screen can be performed by means of steering wheel switch 3 or 310. In this way, the menu that can accept input from steering wheel switch 3 is always displayed on, for example, the right side of the screen, and even in the stopped state input can be performed from both steering wheel switch 3 and touch panel 2 in the same way.

Consequently, since the driver knows the operating method (i.e., the method for selecting operations) for both the stopped state and the running state because of the continuous display of operable items 31, which is shared by the stopped state picture as shown in diagram (A) of Figure 2 and the running state picture as shown in diagram (B) of Figure 2, the consistency of operation by the user can be guaranteed in both the stopped state and running state, and the convenience of use can be improved.

In this way, in the input mode of touch panel 2, and the input mode of steering wheel switch 3, displaying the common menu in a portion of the screen makes it possible to provide consistency in the display images and operating methods. Even an unskilled user or novice can easily learn the input methods for the input means or input pictures, and it is possible to realize a device and a method that can reduce the burden of learning on the user and allow easy use.

As explained above, a judgment can be made from the speed of the vehicle to determine the menus displayed on the screen, as shown in Figures 1 and 3. As shown in diagram (A) of Figure 2 the menus used in the stopped state of the vehicle can be taken as the graphic user interface for touch panel 2, and as shown in diagram (B) the menu used in the running state can be used as the graphic user interface for the list menu.

By placing display 1 within the range where operation can be performed by raising the shoulder while stopped, as shown in Figure 4, it is possible to set it in a position with better visibility than the conventional touch panel.

Also, in the running state, it is possible to perform remote control operations using steering wheel switch 3 set on the steering wheel. Also, the driver may perform remote control using cluster cover C switch 4 set on cluster cover C, and the driver can also use microphone 5 to perform remote control by voice.

In the menu display of known vehicle onboard navigation devices, in order to avoid influencing the driving operation it is necessary to let the user know which menu items are inoperable by graying them out in the display, that is, displaying them with a gray background and text, so that complicated operations cannot be performed during running. During running, the remote control operation types of devices display the items that cannot be operated in the list-form menu as grayed out, and in the touch panel type, the items that cannot be selected are displayed as squares on the menu are displayed grayed-out.

For menu operation, the user usually performs the operation when the car is stopped in a traffic jam or at a red light. In this case, if an operation begun when the vehicle is stopped is incomplete when the car has to move ahead, the state of the grayed-out display of the menu is kept as is, and the user has to wait for the next stop. The user often feels stressed because he/she cannot perform the operation no matter what type of display is made.

Also, if the menu cannot be retained the operation that has been performed up to that point is lost, and it is impossible to see the display because of the map.

In contrast, in the image display device and method taught herein, because the menu is always kept on the right side of the screen even though the map is displayed, the user is not stressed because an operation cannot be performed.

Also, the unskillful user or novice can easily understand the highly consistent menu picture.

For the menu in the stopped state, the map is displayed when the car moves, and by displaying the map on the left side of the screen, it is possible to display the map even in the running state without grayed-out display of the menu so that the display is kept highly visible.

Also as described herein, an operation that has been performed is not lost. When input has been performed with the input part on one side, it is also possible to continue input with the input part on the other side. Consequently, operation becomes more convenient.

As explained above, the image display device has a display 1 that displays the image, and an image processor 6 that classifies and displays on display 1 first items that can be operated when the vehicle is stopped and second items that can be operated in both the stopped state and the running state of the vehicle.

Also, image processor 6 displays the second items using the same display state and the same location continuously in the stopped state and running state of the vehicle.

The image display device has image processor 6 and display 1 that display the picture. The device can also include running/stopped picture switching means 13 that switches between the stopped state picture displayed when the vehicle is in stopped state and the running state picture indicating that the vehicle is running. The image processor 6 and display 1 display operable items 31 shared by the stopped state picture and the running state picture at the same location in the stopped state picture and the running state picture.

As described herein, there is a common menu (operable items 31) in the touch panel 2 input mode in the stopped state and in the steering wheel switch 3 input mode in the running state. By having high consistency in the display image and operating method the unskilled user or novice can also use it easily, hence reducing the learning demands on the user.

Also, display 1 that displays the picture and image processor 6 that determines the items that can be operated in both the stopped state and running state of the vehicle allow transition to the next common item either in the stopped state or running state when an item is operated. As a result, in addition to the ease of use, when an item is operated it is possible to transition to the next common item in both the stopped state and running state.

In an image display method as taught herein, a picture is displayed, and the items in the picture are classified for display as first items that can be operated in the stopped state of the vehicle and second items that can be operated in both the stopped state and running state of the vehicle for display. Also, the stopped state picture indicating the stopped state of the vehicle and the running state picture indicating the running state of the vehicle are switched and displayed. Items that can be operated in both the stopped state picture and the running state picture are displayed, and the operable items are displayed in the same display state and at the same location in the stopped state picture and the running state picture.

With these teachings, the input mode of touch panel 2 in the stopped state and the input mode of steering wheel switch 3 in the running state have a common menu (operable items 31). By providing consistency in the display image and operating method, even unskilled users or novices can use it easily, and the image display method can reduce the learning demands on the user.

Also, more operable items are displayed in the first picture than the second picture by image processor 6 and display 1. According to this variation, it is possible to perform detailed operations even in the stopped state.

There is a steering wheel switch 3 (or cluster cover C switch 4 or microphone 5) that can manipulate the operable items, and touch panel 2 allows pressing the screen for manipulation of the operable items. These make it possible to provide an image display device that is highly convenient both in the stopped state and running state.

Image processor 6 and display 1 display map 33 (as shown in diagram (B) of Figure 2, for example) in the second picture. With this aspect of the invention, it is possible to provide an image display device that is highly convenient by allowing views of the map in the running state.

Steering wheel switch 3 (for operable items 31 in diagram (B) of Figure 6) is set on steering wheel 42 (Figure 4), and it allows operation in two directions, as shown in diagram (A) of Figure 6. Similarly, cluster cover C switch 4 (for operable items 31 in diagram (B) of Figure 7) is set on cluster cover C, and it also allows operation in two directions, as shown in diagram (A) of Figure 7. Image processor 6 and display 1 display the operable items in the same display state and in the same direction as the direction in which steering wheel switch 3 or 310 is operated, as shown in Figures 6 and 7. Accordingly, it is possible to provide a type of image display device that is highly convenient with remote control means that can be used easily.

The description of the embodiments above is intended to facilitate understanding of the technical ideas of the invention. The present invention is not limited to the disclosed embodiments. Consequently, the technical ideas comprise the various elements disclosed in the embodiments and also include all of the modified designs and equivalent schemes falling within the technical scope of the present invention. For example, as described above the operable items shared by the stopped state picture and the running state picture are displayed, and the operable items are displayed in the same display state and at the same location in the stopped state picture and the running state picture. However, it is only required that there be a known corresponding relationship. Instead of being completely the same, they may also be similar. In addition, for the operable items, the aspect ratio of the stopped state picture and that of the running state picture may be different from each other.

Again, the above-described features of the invention have been described in order to allow easy understanding of the present invention and do not in any way limit the present invention. On the contrary, the invention is intended to cover various modifications and equivalent arrangements included within the scope of the appended claims, which scope is to be accorded the broadest interpretation so as to encompass all such modifications and equivalent structure as is permitted under the law. This application claims priority from Japanese Patent Application Serial No. 2005-199912, filed July 8, 2005, the entire contents of which is incorporated herein by reference.

## Claims

1. An image display device for a navigation system of a vehicle, comprising:
a display unit (1) having a screen for displaying a picture; and
a processor (12) connected to the display unit (1), the processor (12) operable to classify display items as first display items that can be operated when the vehicle speed is below a selected value and second display items that can be operated when the vehicle is stopped or running, and the processor (12) operable to display simultaneously the first and second display items on the display unit (1).

2. The image display device according to claim 1, wherein the processor (12) is further operable to display the second display items in a same display state and at a same location when the vehicle is stopped or running.

3. The image display device according to claim 1, further comprising a touch input device for operating at least the second display items through contact with the screen of the display unit (1).

4. The image display device according to claim 1, further comprising a remote control input device (3) for operating at least the second display items, the remote control input device (3) remote from the display unit (1).

5. The image display device according to claim 4, wherein the remote control input device (3) is attached to a steering wheel of the vehicle and the remote control input device (3) being operable in two directions; and wherein the processor (12) is further operable to select one of the second display items for operation based on operation of the remote control input device (3).

6. The image display device according to claim 1, wherein the processor (12) is further operable to transition from a simultaneous display of the first and second display items to a simultaneous display the first display items and additional display items operable when the vehicle is stopped or running, when one of the second display items is operated.

7. The image display device according to claim 6, wherein the processor (12) is further operable to display the additional display items in a same relative location with respect to the first display items as the second display items with respect to the first display items.

8. A method for operating an image display device of a vehicle, comprising:
classifying items to be displayed on a screen (1) of the image display device as first items that can be operated when the vehicle speed is below a selected value and second items that can be operated when the vehicle is stopped or running; and
displaying an image including both the first items and the second items on the screen (1) of the display device when the vehicle speed is below the selected value.

9. The method according to claim 8, further comprising, prior to the classifying of items to be displayed: associating two or more operating functions of the image display device with a corresponding image icon that is displayable on the display screen;
further comprising monitoring the speed of the vehicle; and
simultaneously displaying the first group of image icons and the second group of image icons on the display screen when the vehicle is below the selected speed.

10. The image display method according to claim 8 or claim 9, further comprising:
displaying the first group of image icons in a same display state and at a same location when the vehicle is at or above a selected speed as when the vehicle is below the selected speed.

11. The image display method according to any one of claims 8 to 10, further comprising:
triggering operation of an operating function associated with an image icon through manipulation of an input device remote from the display screen.

12. The image display method according to any one of claims 8 to 11, further comprising:
transitioning from display including the first group of image icons to a third group of image icons when one of the first group of image icons is manipulated; and
displaying the third group of image icons in a same relative position as the first group of image icons.
